# EUROPÄISCHE PATENTSCHRIFT

(11) **EP 1 740 845 B1**
(45) Veröffentlichungstag und Bekanntmachung des Hinweises auf die Patenterteilung: **07.04.2010**
(21) Anmeldenummer: 05740243.0
(22) Anmeldetag: 19.04.2005
(51) Int. Cl.: F16D 65/56

(54) **NACHSTELLVORRICHTUNG FÜR PNEUMATISCH BETÄTIGTE SCHEIBENBREMSEN UND SCHEIBENBREMSE**
READJUSTING DEVICE FOR PNEUMATICALLY ACTUATED DISK BRAKES, AND DISK BRAKE
DISPOSITIF DE REGLAGE POUR FREINS A DISQUE A ACTIONNEMENT PNEUMATIQUE ET FREIN A DISQUE

(30) Priorität: 20.04.2004 DE 102004019723
(43) Veröffentlichungstag der Anmeldung: 10.01.2007
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE); SCHÖNAUER, Manfred, 80995 München (DE)
(74) Vertreter: Mattusch, Gundula
(86) Internationale Anmeldenummer: PCT/EP2005/004124
(87) Internationale Veröffentlichungsnummer: WO 2005/103522

(56) Entgegenhaltungen:
- DE-C2- 19 814 807
- US-A- 5 379 867

## Beschreibung

Die Erfindung betrifft eine Nachstellvorrichtung nach dem Oberbegriff des Anspruchs 1 und eine Scheibenbremse.

Nachstellvorrichtungen an Scheibenbremsen dienen zum Ausgleich der infolge von Verschleiß dünner werdenden Bremsbeläge, welche sie in Richtung der Bremsscheibe verschieben, um ein Soll-Lüftspiel einzustellen, damit der zum Bremsen notwendige Arbeitshub konstant bleibt.

Ein Beispiel einer derartigen Nachstellvorrichtung, die im Zwischenraum zwischen zwei parallelen Drehspindeln angeordnet ist und mit diesen über Kegelräder gekoppelt ist, zeigt die US 5 379 867 A.

Gattungsgemäße Nachstellvorrichtungen sind aus dem europäischen Patent EP 0 531 321 B1 bekannt. Hinsichtlich der einzelnen Details der Funktion der gattungsgemäßen Nachstellvorrichtung und eines Beispiels einer drehhebelbetätigten Scheibenbremse, für welche sich der gattungsgemäße Nachsteller - aber auch der erfindungsgemäße Nachsteller - eignen, wird vollinhaltlich auf diese Schrift verwiesen.

Die in der EP 0 531 321 B1 dargestellten Nachstellvorrichtungen haben sich an sich hervorragend bewährt. Sie sind im Inneren von Dreh- bzw. Stellspindeln angeordnet, welche Druckstücke tragen, die auf einen der Bremsbeläge einwirken. Sie eignen sich für Scheibenbremsen verschiedener Art, denen gemeinsam ist, dass sie eine oder mehrere Stellspindeln aufweisen.

Während einer Nachstellbewegung beim Bremsen übertragen die gattungsgemäßen Nachstellvorrichtungen mittels einer Abtriebsbuchse ein Drehmoment auf ihre zugeordnete Stellspindel, welche an ihren bremsscheibenzugewandten Ende das Druckstück trägt, das auf die Belagträgerplatte eines Bremsbelages einwirkt. Durch die Drehbewegung der Stellspindel wird das Druckstück axial in Richtung der Scheibenbremse verschoben, um eine verschleißbedingte Verringerung der Dicke des Bremsbelagmaterials auszugleichen. Zur Sicherstellung der Nachstellfunktion weisen die Nachstellvorrichtungen im allgemeinen einen Freilauf auf, damit der Nachsteller nicht beim Lösen der Bremse zurückdreht sowie eine Überlastkupplung, die beim Anliegen der Druckstücke am Bremsbelag anspricht.

Die Abtriebsbuchse des Standes der Technik ist an ihrem Außenumfang mit wenigstens einem radial vorkragenden zahnartigen Zahn zum Eingriff in wenigstens eine korrespondierende zahnartige Nut am Innenumfang der Stellspindel versehen. Diese Anordnung hat sich zwar an sich bewährt, sie soll aber insbesondere des Verhindems einer zu weitgehenden bzw. zu kleinen Lüftspielnachstellung infolge von Rüttelbeanspruchungen und dgl. weiterentwickelt werden.

Vor diesem Hintergrund ist es die Aufgabe der Erfindung, die gattungsgemäße Nachstellvorrichtung derart weiterzuentwickeln, dass ihre Funktion noch weiter optimiert wird. Insbesondere soll sicher vermieden werden, dass ein Lüftspiel auf zu kleine Werte eingestellt wird.

Diese Aufgabe löst die Erfindung durch den Gegenstand des Anspruchs 1.

Nach dem Gegenstand des Anspruchs 1 wird eine Nachstellvorrichtung realisiert, welche an der Schnittstelle zwischen der Abtriebshülse der Nachstellvorrichtung und der Nachstell-Stellspindel (typischerweise ein Gewinderohr) spielfrei alle Fertigungstoleranzen ausgleicht, ohne beim Verdrehen und Verschieben der Nachstellerachse zu einem Klemmen zu führen.

Im Gegenteil dazu werden sogar die Nachstelleigenschaften bei Rüttelbeanspruchungen, Verdrehen und Verschieben der Nachstellerachse zur Gewinderohr bzw. Stellspindelachse, Wiederholversuchen durch statisches Zuspannen und deren Kombination positiv beeinflusst.

Vorzugsweise sind die Abtriebsbuchse und die Spindel dabei begrenzt relativ zueinander drehbar.

Besonders bevorzugt ist auf die Spindel ein Mitnehmerstern aufgesetzt; der mit der Spindel drehfest verbunden ist und die Außenverzahnung aufweist, welche in die Innenverzahnung der Stellspindel eingreift.

Dies kann nach einer ersten Variante einfach dadurch realisiert werden, dass die Abtriebsbuchse eine Aussparung in ihrer Umfangswandung aufweist, welche der Mitnehmerstem radial durchsetzt, wobei der Mitnehmerstern nur in diesem Bereich die Außenverzahnung aufweist.

Alternativ ist dies auch einfach realisierbar, dass der Mitnehmerstern und die Abtriebsbuchse axial zueinander versetzt angeordnet sind.

Die Erfindung schafft auch eine Scheibenbremse mit einer Nachstellvorrichtung nach einem der Ansprüche 1 bis 5.

Die Erfindung bietet dabei zusammengefasst den Vorteil einer deutlich verbesserten Funktionalität bei unverändertem Bauraumbedarf und quasi gleichbleibenden Herstellkosten.

Weitere vorteilhafte Ausgestaltungen sind in den übrigen Unteransprüchen angegeben.

Nachfolgend wird die Erfindung anhand eines Ausführungsbeispiels unter Bezug auf die Zeichnung näher beschrieben. Es zeigt:
- Fig. 1: eine Schnittansicht eines ersten erfindungsgemäßen Nachstellers;
- Fig. 2: eine Schnittansicht eines zweiten erfindungsgemäßen Nachstellers; und
- Fig. 3: einen Schnitt durch einen Nachsteller nach dem Stand der Technik.

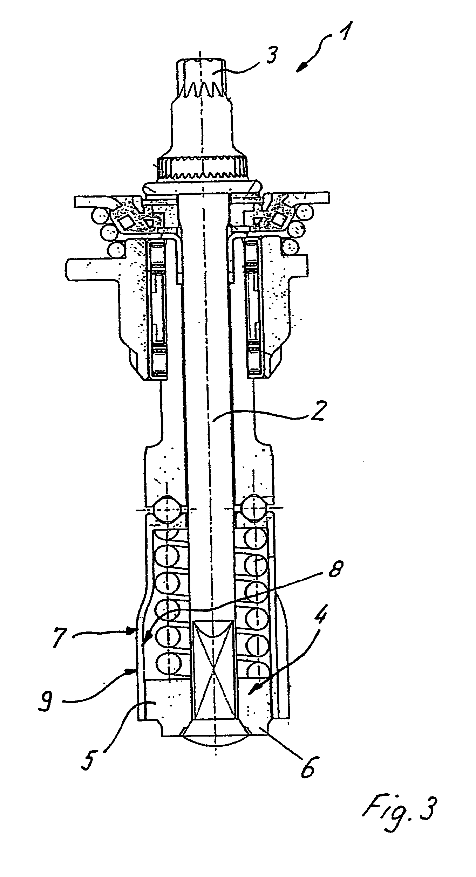

Fig. 3 zeigt eine Nachstellvorrichtung nach dem Stand der Technik. Diese Nachstellvorrichtung weist eine Reihe von Gemeinsamkeiten mit dem Nachsteller der Fig. 5 der EP 0 531 321 B1 auf. Insbesondere eignet sie sich zum Einbau in eine drehhebelbetätigte pneumatisch betätigte Scheibenbremse, deren Grundaufbau dem der EP 0 531 321 B1 entsprechen kann, so dass ergänzend auf die Offenbarung dieser Schrift verwiesen wird.

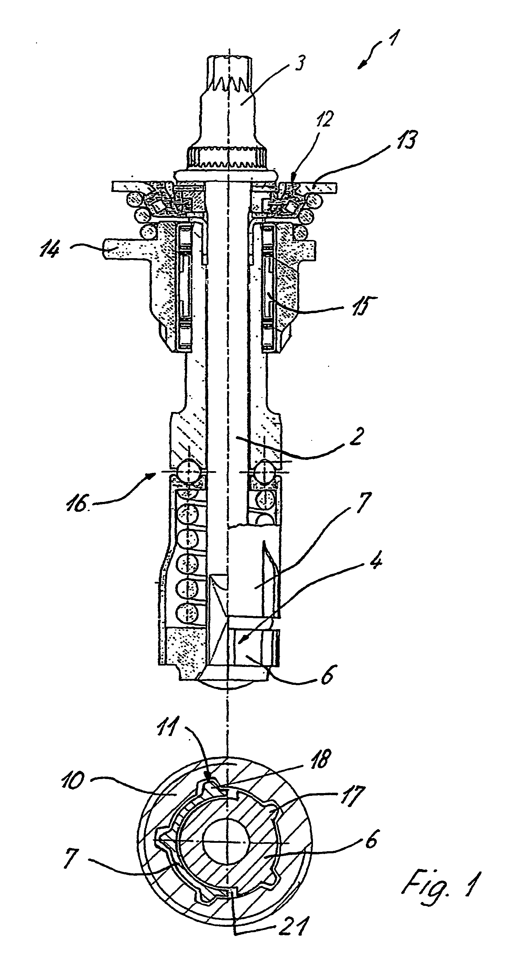

Die Nachstelleinrichtung der Fig. 3 ist dazu ausgelegt, nach Art der EP 0 531 321 B1, Fig. 1 in eine bremsscheibenabgewandte Ausnehmung einer Stellspindel eingesetzt zu werden, die relativ zur Nachstellvorrichtung unverdrehbar aber axial verschieblich ist, um durch eine Veränderung der Gesamtlänge der beiden Bauelemente Nachstellvorrichtung und Stellspindel den Verschleiß an den Bremsbelägen der Scheibenbremse auszugleichen, um das Lüftspiel möglichst konstant zu halten. Die Nachstelleinrichtung eignet sich insbesondere für Scheibenbremse mit zwei Stellspindeln, die mittels einer Synchronisationseinrichtung miteinander synchronisiert sind, wobei vorzugsweise nur in einer der Stellspindeln eine Nachstellvorrichtung angeordnet ist und die zweite Stellspindel über die Synchronisationseinrichtung mitgedreht wird.

Einen Nachsteller, dessen Aufbau weitestgehend mit dem der Fig. 3 der vorliegenden Anmeldung übereinstimmt, zeigt im übrigen auch die DE 198 14 807 C2.

Die Nachstelleinrichtung 1 der Fig. 3 stützt sich in einem Bremssattel ab. Sie weist eine sich über ihre ganze Länge erstreckende ein- oder mehrteilige Spindel 2 auf, die bremsscheibenabgewandt in einem manuell z.B. mittels eines Schraubenschlüssels betätigbaren Mehrkantkopf 3 zum Rückstellen der Nachstellvorrichtung endet und bremsscheibenzugewandt in einem radial breiteren Endabschnitt 4. Dieser radial breitere Endabschnitt mit einem größeren Durchmesser als die übrige Spindel wird hier durch einen mit einer Außenverzahnung 5 versehenen Mitnehmerstern 6 ausgebildet, der drehfest mit der Spindel 2 verbunden ist und der konzentrisch von einer korrespondierend geformten Abtriebsbuchse 7 umgeben ist, die einerseits mit einer Innenverzahnung 8 und andererseits mit einer Außenverzahnung 9 versehen ist, welche in am Innenumfang der Stellspindel 10 (siehe Figur 1) versehene axial verlaufende Nuten 11 eingreifen. Zur Drehmomentübertragung sind jeweils wenigstens ein Zahn bzw. eine korrespondierende Nut erforderlich.

Bei einem Verdrehen der Spindel 2 der Nachstellvorrichtung drehen sich auch der Mitnehmerstern 6 und die Abtriebsbuchse 7, so dass die Außenverzahnung 9 über den Eingriff in die Nuten 11 die Stellspindel 10 mit Außengewinde mitdreht.

Andererseits dreht auch die über mehrere nachstehend erläuterte Zwischenelemente von der Zuspanneinrichtung der Scheibenbremse angetriebene Abtriebsbuchse 7 dann, wenn sie beim Zuspannen verdreht wird, den Mitnehmerstern 6 mit sowie damit die Spindel 2 und auch die Drehspindel 10 mit.

Da die Drehspindel 10 wiederum das Außengewinde aufweist, mit dem sie in einem hier nicht dargestellten Teil der Zuspannvorrichtung verschraubt ist, verändert sich beim Drehen der Drehspindel 10 und der Spindel 2 die axiale Länge des Gesamtsystems aus Stellspindel 10 und der Nachstellvorrichtung 1 mit der Spindel 2, wodurch das Lüftspiel nachgestellt wird.

Zur Halterung am Bremssattel weist die Nachstellvorrichtung ein relativ zur Spindel 2 axial unverschieblich angeordnetes, ortsfestes Teil 12 - hier ein Ringteil mit einem Flansch 13 - auf, wobei die Spindel 2 in dem Ringteil 12 verdrehbar gelagert ist.

Ein radial vorkragender Hebel 14 auf der Spindel 2 dient als Antriebseinrichtung für die Nachstellvorrichtung.

Der Hebel 14 kann beispielsweise mit einem Drehhebel der Scheibenbremse derart gekoppelt werden, dass er beim Zuspannen der Scheibenbremse in eine erste Richtung und beim Lösen der Scheibenbremse in die entgegengesetzte Richtung verdreht wird.

Damit die Drehspindel 10 nur beim Zuspannen der Scheibenbremse zum Ausgleich des Lüftspiels gedreht wird und nicht beim Lösen der Scheibenbremse eine entgegengesetzte Drehung erfolgt, sind zwischen dem Hebel 14 und der Abtriebsbuchse 7 eine Freilaufeinrichtung 15 - welche nur Drehungen der Abtriebsbuchse 7 mit dem Hebel 14 beim Zuspannen der Scheibenbremse zulässt - und eine Drehmomentbegrenzung in Form einer Überlastkupplung 16 angeordnet, die hier als Kugelrampenanordnung realisiert ist. Diese Anordnung ist detailliert in der EP 0 531 321 B1 beschrieben.

Um unerwünschte Drehungen infolge von Rüttelbeanspruchungen und dgl. zu verhindern ist die Spindel 2 mit einem Reibmoment versehen, d.h., sie kann unterhalb eines Grenzdrehmoments nicht verdreht werden.

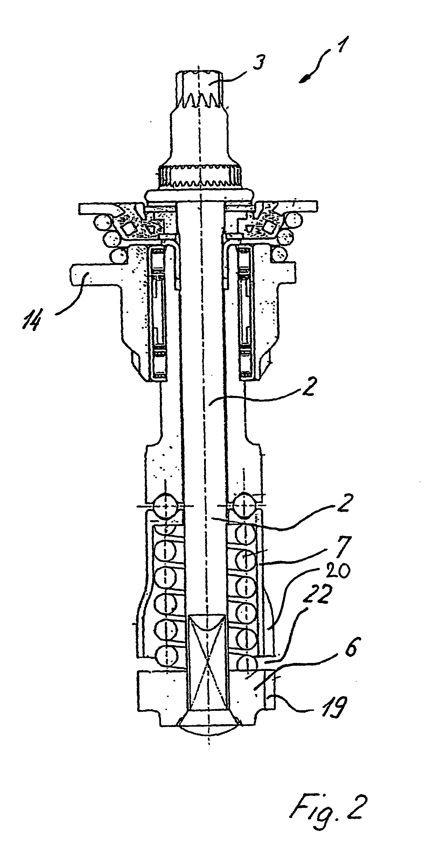

Diesen Effekt macht sich die Erfindung in besonderer Weise zu Nutze, indem sie nach Fig. 1 und Fig. 2 in alternativen Ausgestaltungen einen direkten Eingriff sowohl der Spindel 2 bzw. eines mit der Spindel 2 drehfest verbundenen Teils - hier der Mitnehmerstern - als auch der Abtriebsbuchse 7 in die Nuten 11 der Drehspindel 10 schafft und die Abtriebsbuchse 7 und die Spindel 2 dabei insbesondere voneinander entkoppelt.

Nach Fig. 1 wird diese Entkopplung dadurch realisiert, dass die Abtriebsbuchse 7 wenigstens über einen Teil ihrer axialen Länge eine Aussparung 21 aufweist, welche der Mitnehmer nach außen hin durchsetzt, wobei dass die Abtriebsbuchse 7 nach Fig. 1 und 2 keine Innenverzahnung und der Mitnehmerstern 6 in dem Bereich, indem er konzentrisch zur Abtriebsbuchse 7 liegt, keine Außenverzahnung aufweist.

Der direkte Eingriff der Spindel 2 bzw. hier des mit der Spindel 2 drehfest verbundenen Teils Mitnehmerstern 6 in die Nuten 11 der Stellspindel 10 wird nach Fig. 1 dadurch realisiert, dass der Mitnehmerstern 6 in seinem die Aussparung 21 durchsetzenden radialen Abschnitt eine Außenverzahnung 17 mit wenigstens einem Zahn aufweist, welche in die wenigstens eine Nut 11 der Drehspindel 10 eingreift. Die Abtriebsbuchse 7 weist dabei ebenfalls eine Außenverzahnung 18 auf, welche in die Nut 11 eingreift, wobei die Außenverzahnung 18 axial vor dem Bereich des Mitnehmersterns 6 ansetzen kann und sich hier axial bis zum Ende der Abtriebsbuchse bis auf den Bereich der Aussparung fortsetzt.

Abtriebsbuchse 7 und Mitnehmerstern 6 sind dabei derart ausgestaltet, dass sie begrenzt zueinander verdrehbar sind.

Nach Fig. 2 sind die Abtriebsbuchse 7 und der Mitnehmerstern 6 axial hintereinander angeordnet, wobei zwischen ihm ein Spalt 22 besteht, und greifen nicht mehr konzentrisch ineinander. Sowohl der Mitnehmerstern 6 als auch die Abtriebbuchse 7 weisen wiederum eine Außenverzahnung 19, 20 auf, die in axial zueinander versetzten Bereichen in die Nut 11 in der Drehspindel 10 eingreifen. Da derart die Spindel 2, die erst ab einem gewissen minimalen Drehmoment drehbar ist (was jedenfalls ungewolltes Drehen durch Rüttelbeanspruchungen im Betrieb ausschließt), direkt in die Drehspindel 10 eingreift, werden auch Drehungen dieses Elementes unterhalb eines Grenzdrehmomentes auf einfache Weise verhindert, da es zu einer leichten Verspannung zwischen der Abtriebsbuchse 7 und dem Mitnehmerstern 6 kommt. Hierdurch wird ein Verkleinern des Lüftspiels über einen gewünschten Wert hinaus noch sicherer als nach dem Stand der Technik ausgeschlossen, denn ein Spiel zwischen der Nachstellvorrichtung und der rohrartigen Gewindespindel 10 wird kompensiert.

Da die Abtriebsbuchse nach Fig. 2 axial kürzer ist als nach Fig. 3 und da in Fig. 1 die axiale Länge zu Fig.3 vergleichbar ist, vergrößert sich durch die erfindungsgemäße Ausgestaltung nicht die axiale Länge der Nachstellvorrichtung gegenüber dem Stand der Technik.

### Bezugszeichen

- Nachstellvorrichtung: 1
- Spindel: 2
- Mehrkantkopf: 3
- Endabschnitt: 4
- Außenverzahnung: 5
- Mitnehmerstern: 6
- Abtriebsbuchse: 7
- Innenverzahnung: 8
- Außenverzahnung: 9
- Stellspindel: 10
- Nuten: 11
- ortsfestes Teil: 12
- Flansch: 13
- Hebel: 14
- Freilaufeinrichtung: 15
- Überlastkupplung: 16
- Außenverzahnung: 17, 18
- Außenverzahnung: 19, 20
- Aussparung: 21

## Patentansprüche

1. Nachstellvorrichtung (1) einer Scheibenbremse, welche zum Verdrehen und damit axialen Bewegen wenigstens einer Stellspindel (10) dient, die mit einer Innenverzahnung (11) aus einer oder mehreren axial verlaufenden Nuten versehen ist,
wobei die Nachstellvorrichtung eine Abtriebsbuchse (7) mit einer Außenverzahnung aufweist,
welche in die Innenverzahnung der Stellspindel (10) eingreift,
und eine ein- oder mehrteilige Spindel (2), welche die Nachstellvorrichtung axial durchsetzt und dazu dient, die Nachstellvorrichtung manuell zu lösen, wobei die Spindel (2) derart angeordnet und/oder gelagert ist, dass Drehungen der Spindel (2) unterhalb eines Grenzdrehmomentes verhindert werden, welches größer ist als die durch Rüttelbeanspruchungen im Betreib der Scheibenbremse hervorgerufenen Drehmomente,
**dadurch gekennzeichnet, dass**
die Spindel (2) oder ein mit der Spindel (2) drehfestverbundenes Bauteil (6) ebenfalls eine Außenverzahnung (17) aufweist, welche ebenfalls direkt in die nutartige Innenverzahnung (11) der Stellspindel (10) eingreift und dass die Abtriebsbuchse (7) und die Spindel (2) voneinander entkoppelt sind.

2. Nachstellvorrichtung nach Anspruch 1, **dadurch gekennzeichnet, dass** die Abtriebsbuchse (7) und die Spindel (2) begrenzt relativ zueinander drehbar sind.

3. Nachstellvorrichtung nach Anspruch 1 oder 2, **dadurch gekennzeichnet, dass** auf die Spindel ein Mitnehmerstern (6) aufgesetzt ist, der mit der Spindel (2) drehfest verbunden ist und die Außenverzahnung aufweist, welche in die Innenverzahnung der Stellspindel (10) eingreift.

4. Nachstellvorrichtung nach Anspruch 3, **dadurch gekennzeichnet, dass** die Abtriebsbuchse (7) eine Aussparung in ihrer Umfangswandung aufweist, welche der Mitnehmerstern (6) radial durchsetzt, wobei der Mitnehmerstern (6) nur in diesem Bereich die Außenverzahnung ( 17) aufweist.

5. Nachstellvorrichtung nach Anspruch 3, **dadurch gekennzeichnet, dass** der Mitnehmerstern (6) und die Abtriebsbuchse (7) axial zueinander versetzt angeordnet sind.

6. Scheibenbremse, **gekennzeichnet durch** eine Nachstellvorrichtung nach einem der vorstehenden Ansprüche.

## Claims

1. An adjusting device (1) of a disc brake, which serves to rotate and therefore axially move at least one adjusting spindle (10) which is provided with an inner toothing (11) comprising one or more axially running grooves,
wherein the adjusting device has a drive output sleeve (7) with an outer toothing,
which engages in the inner toothing of the adjusting spindle (10),
and a single-part or multi-part spindle (2) which extends axially through the adjusting device and serves to manually release the adjusting device, wherein the spindle (2) is arranged and/or mounted so as to prevent rotations of the spindle (2) below a limit torque which is greater than the torques caused by vibration loading during operation of the disc brake,
**characterised in that**
the spindle (2), or a component (6) which is rotationally fixedly connected to the spindle (2), also has an outer toothing (17) which likewise engages directly in the groove-like inner toothing (11) of the adjusting spindle (10) and that the drive output sleeve (7) and the spindle (2) are decoupled from each other.

2. The adjusting device as claimed in claim 1, **characterised in that** the drive output sleeve (7) and the spindle (2) are rotatable relative to one another to a limited extent.

3. The adjusting device as claimed in claim 1 or 2, **characterised in that** a star-shaped driver (6) is placed on the spindle, said star-shaped driver (6) being rotationally fixedly connected to the spindle (2) and having the outer toothing which engages in the inner toothing of the adjusting spindle (10).

4. The adjusting device as claimed claim 3, **characterised in that** the drive output sleeve (7) has a cut-out in its peripheral wall, the star-shaped driver (6) extending radially through said cut-out, wherein the star-shaped driver (6) has the outer toothing (17) only in said region.

5. The adjusting device as claimed in claim 3, **characterised in that** the star-shaped driver (6) and the drive output sleeve (7) are arranged so as to be offset relative to one another axially.

6. A disc brake, **characterised by** an adjusting device as claimed in one of the preceding claims.

## Revendications

1. Dispositif (1) de réglage d'un frein à disque qui sert à faire tourner et ainsi à déplacer au moins une broche qui est pourvue d'une denture (11) intérieure constituée d'une ou de plusieurs rainures s'étendant axialement,
dans lequel le dispositif de réglage comprend une douille (7) menée ayant une denture extérieure, qui engrène dans la denture intérieure de la broche (10) de réglage,
et une broche (2), en une partie ou en plusieurs parties, qui traverse axialement le dispositif de réglage et sert à desserrer manuellement le dispositif de réglage, la broche (2) étant disposée et/ou montée de façon à empêcher des rotations de la broche (2) en dessous d'un couple de rotation limite, qui est plus grand que les couples de rotation provoqués par des sollicitations en vibration lorsque le frein à disque fonctionne,
**caractérisé en ce que**
la broche (2) ou un élément (6) solidaire en rotation de la broche (2) a également une denture (17) extérieure qui engrène également directement dans la denture (11) intérieure de type à rainure de la broche (10) de réglage et **en ce que** la douille (7) menée et la broche (2) sont découplées l'une de l'autre.

2. Dispositif de réglage suivant la revendication 1, **caractérisé en ce que** la douille (7) menée et la broche (2) peuvent tourner l'une par rapport à l'autre d'une manière limitée.

3. Dispositif de réglage suivant la revendication 1 ou 2, **caractérisé en ce que** sur la broche est enfilée une étoile (6) formant entraîneur, qui est solidaire en rotation de la broche (2) et qui a la denture extérieure qui engrène dans la denture intérieure de la broche (10) de réglage.

4. Dispositif de réglage suivant la revendication 3, **caractérisé en ce que** la douille (7) menée a un évidement dans sa paroi de pourtour, que l'étoile (6) formant entraîneur traverse radialement, l'étoile (6) formant entraîneur n'ayant la denture (17) extérieure que dans cette partie.

5. Dispositif de réglage suivant la revendication 3, **caractérisé en ce que** l'étoile (6) formant entraîneur et la douille (7) menée sont décalées axialement l'une par rapport à l'autre.

6. Frein à disque, **caractérisé par** un dispositif de réglage suivant l'une des revendications précédentes.
